## Europäisches Patentamt

## European Patent Office

## Office européen des brevets

(11) Veröffentlichungsnummer: **0 143 885**

**A1**

(12) # EUROPÄISCHE PATENTANMELDUNG

(21) Anmeldenummer: **84108797.6**

(22) Anmeldetag: **25.07.84**

(51) Int. Cl.⁴: **A 47 J 37/12**

(30) Priorität: **03.11.83 DE 3339722**

(43) Veröffentlichungstag der Anmeldung:
**12.06.85 Patentblatt 85/24**

(84) Benannte Vertragsstaaten:
**BE DE FR IT NL**

(71) Anmelder: **ROBERT KRUPS STIFTUNG & CO. KG.**
**Heresbachstrasse 29**
**D-5650 Solingen 19(DE)**

(72) Erfinder: **Lorenz, Horst**
**Dahlerstrasse 17**
**D-5650 Solingen 1(DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114**
**D-5600 Wuppertal 2(DE)**

(54) **Elektrisches Fritiergerät.**

(57) Elektrisches Fritiergerät mit einem topfartigen, über eine Heizeinrichtung heizbaren und Speiseöl aufnehmenden Behälter (10) und mit einem den Behälter verschließenden abnehmbaren Deckel. Damit das nach dem Gebrauch verunreinigte Speiseöl leicht aus dem Behälter entfernt werden kann, wird in den Behälter ein Ölförderer (14) eingesetzt, dessen Einlaß im Bereich des Bodens des Behälters liegt und dessen Auslaß abnehmbar einen Reinigungs- und Filterbeutel (30) trägt, der das gereinigte Öl in ein Auffanggefäß (31) austreten läßt, das seitlich neben dem Behälter des Fritiergerätes angeordnet ist.

*FIG.1*

EP 0 143 885 A1

PATENTANWÄLTE

DIPL.-PHYS. BUSE · DIPL.-PHYS. MENTZEL · DIPL.-ING. LUDEWIG
Jnterdörnen 114 · Postfach 200210 · 5600 Wuppertal 2 · Fernruf (0202) 557022/23/24 · Telex 8591606 wpat

**0143885**

89                                    **5600 Wuppertal 2, den**

Kennwort: Ölreinigung

Firma Robert Krups Stiftung & Co. KG., Heresbachstr. 29, 565o Solingen 19

------------------------------------------------------------------------

Elektrisches Fritiergerät

------------------------------------------------------------------------

Die Erfindung bezieht sich auf ein elektrisches Fritiergerät mit einem topfartigen, über eine Heizeinrichtung heizbaren und Speiseöl aufnehmenden Behälter und mit einem den Behälter verschließenden abnehmbaren Deckel.

Derartige elektrische Fritiergeräte sind in verschiedenen Ausführungsformen
bekannt. Bei der Benutzung aller dieser elektrischen Fritiergeräte tritt das
Problem auf, daß das Speiseöl gereinigt werden muß, um beispielsweise Restbestandteile der in dem Fritiergerät zubereiteten Lebensmittel aus dem Speiseöl zu entfernen. Um dieses zu erreichen, sind verschiedene Einrichtungen und
Reinigungsmethoden bekannt. Im einfachsten Falle wird das gebrauchte Speiseöl durch einfaches Absieben gereinigt. Zu diesem Zweck wird das Speiseöl
zum Filtern durch ein Tuch gegeben, das über einen Topf gespannt wird. Diese
Art der Ölreinigung ist nicht nur mühsam und zeitaufwendig sondern auch gefährlich, insbesondere dann, wenn das zu reinigende Speseöl noch heiß ist. Es
ist ferner ein Topfabgießer bekannt, der aus einem Sieb von etwa Topfdurchmesser besteht, das in den Behälter des Fritiergerätes eingehängt und an einem
Griff zusammen mit dem Behälter festgehalten wird. Ein derartiges Sieb ist
aus mancherlei Gründen nachteilig. Insbesondere ist es grobmaschig, so daß
kleinere Verunreinigungen im Speiseöl nicht zurückgehalten werden. Man
könnte dies zwar dadurch verhindern, daß man das Sieb feinmaschiger gestaltet, jedoch wird dann die Durchsatzgeschwindigkeit wesentlich kleiner.
Beim Gebrauch muß der Behälter in umgekehrter Stellung über einem Auffanggefäß festgehalten werden, was mit erheblichem Kraftaufwand verbunden ist.

Es ist ferner ein Fritiergerät bekannt, dessen nach außen gewölbter Deckel kegelstumpf- oder kalottenförmig gestaltet ist und in seinem Scheitel eine Aufnahme mit Mitteln zum lösbaren Einsetzen eines Fettabgießfilters aufweist. Bei dieser Ausführungsform wird somit der Deckel des Fritiergerätes zum Filtergefäß umfunktioniert. Zum Filtern wird nach Beendigung des Fritierens, gegebenenfalls nach Entfernen eines Wrasenfilters, der Deckel umgekehrt auf ein Auffanggefäß gesetzt, wobei in die erwähnte Aufnahme ein Fettfilter eingesetzt und das flüssige Fett durchgesiebt wird. Auch bei dieser Ausführungsform ist ein Anheben des Behälters und ein Umgießen von Hand erforderlich, was insbesondere dann Gefahren mit sich bringt, wenn das zu reinigende Öl noch heiß ist.

Ferner ist es bekannt, in dem Deckel eines elektrischen Fritiergerätes eine nach dem Behälterinneren weisende Vertiefung anzuordnen, die Öffnungen enthält. In dieser Vertiefung ist ein Filter angeordnet. Bei dieser bekannten Ausführungsform muß das Speiseöl zunächst aus dem Behälter entnommen werden, um dann zu seiner Reinigung durch den Filter im Deckel hindurch in den Behälter zurückgegossen zu werden.

Der Erfindung liegt die Aufgabe zugrunde, elektrische Fritiergeräte der eingangs näher gekennzeichneten Art unter Vermeidung der angeführten Nachteile bekannter Ausführungsformen derart zu verbessern, daß eine einfache und gefahrlose Reinigung des gebrauchten Speiseöles möglich ist. Insbesondere soll das elektrische Fritiergerät derart gestaltet sein, daß ein Anheben des Behälters mit dem zu reinigenden Öl, um es durch ein Tuch oder einen Filter hindurch in ein Auffanggefäß zu gießen, entfällt.

Dieses Ziel ist erfindungsgemäß im wesentlichen erreicht durch einen in den Behälter einsetzbaren Ölförderer, dessen Einlaß im Bereich des Bodens des Behälters liegt und dessen Auslaß abnehmbar einen Reinigungs- und Filterbeutel trägt. Bei der bevorzugten Ausführungsform der Erfindung ist der Ölförderer als Pumpe ausgebildet. Diese Ausführungsform des elektrischen

Fritiergerätes hat gegenüber den bekannten Ausführungsformen für den Benutzer erhebliche Vorteile. Der Ölförderer ist ein Zusatzgerät zu der elektrischen Friteuse, das nach Abnehmen des Deckels in den dann offenen Behälter des Fritiergerätes eingesetzt werden kann. Um dabei alles Öl aus dem Behälter entfernen zu können, liegt sein unteres Ende im Bereich des Bodens des Behälters. Durch den Ölförderer wird das verschmutzte Speiseöl durch den im Bereich seines Auslasses angebrachten Reinigungs- oder Filterbeutel hindurch in ein Auffanggefäß überführt. Der Reinigungs- und Filterbeutel ist abnehmbar am Auslaß angebracht, so daß ein leichtes Auswechseln und Austauschen möglich ist.

Nach einem weiteren Vorschlag der Erfindung weist eine im Gehäuse des Ölförderers gelagerte Welle an ihrem einen in das Öl eintauchenden Ende eine Fördereinrichtung, vorzugsweise ein Flügelrad, auf, während ihr anderes Ende mit einem Antrieb kuppelbar ist. Hinsichtlich der Ausbildung des Antriebes der Welle des Ölförderers sind mannigfache Ausführungsformen möglich. Bevorzugt wird ein elektromotorischer Antrieb für den Ölförderer. Dabei kann der Elektromotor sowohl über Batterien als auch über einen Stromnetzanschluß betrieben werden.

Um auf einen zusätzlichen Elektromotor zum Antrieb des Ölförderers zu verzichten, wird nach einem weiteren Vorschlag der Erfindung die Kupplung der Welle des Ölförderers derart ausgebildet, daß ein elektromotorisch betriebenes Haushaltsgerät, insbesondere ein Mixer, zum Antrieb der Welle benutzbar ist.

Bei einer einfachen Ausführungsform ist auch ein Handbetrieb des Ölförderers möglich. Hier wird auf jeglichen Motor verzichtet.

Auch hinsichtlich der Ausbildung der eigentlichen Fördereinrichtung sind mehrere Möglichkeiten gegeben. So ist es beispielsweise möglich, eine Tauchpumpe bzw. eine Radialpumpe einzusetzen.

Bei der bevorzugten Ausführungsform der Erfindung weist der Ölförderer einen den Rand des Behälters übergreifenden Aufhänger auf. Nach Entfernen des Deckels des elektrischen Fritiergerätes wird bei dieser Ausführungsform der Ölförderer einfach über den Rand des Behälters gehängt. Nach dem Aufhängen des Ölförderers am Rand des Behälters ragt er bis in unmittelbare Nähe des Behälterbodens, so daß die Gewähr für ein vollständiges Abpumpen des zu reinigenden Öles gegeben ist.

Zweckmäßig ist es, den Aufhänger gabelförmig zu gestalten und ihn zwei Arme aufweisen zu lassen, die einen Freiraum begrenzen und an ihren vorderen Enden jeweils in einen Haken auslaufen.

Es empfiehlt sich, den Ölförderer eine in seiner Längsrichtung verlaufende Bohrung zur Unterbringung der Welle aufweisen zu lassen, die an ihrem einen Ende offen ist und an ihrem gegenüberliegenden anderen Ende in einen verengten Bohrungsbereich übergeht, an dessen Ende eine Aufnahme zur Unterbringung eines Lagers für die Welle angeordnet ist, wobei die Aufnahme in einen kammerartigen Raum übergeht, in dem das Flügelrad angeordnet ist.

Zweckmäßig ist das in das Speiseöl eintauchende Ende des Ölförderers durch eine Überwurfmutter verschlossen, dessen zugleich die untere Begrenzungswand des kammerartigen Raumes bildende Decke einen Durchbruch zum Durchtritt des zu fördernden Öles aufweist. Durch Abnehmen der Überwurfmutter wird der kammerartige Raum und damit das Flügelrad und dergl. freigelegt. Darüber hinaus ist es nach dem Abnehmen der Überwurfmutter möglich, die Welle mit den an ihrem Ende befestigten Flügelrad aus dem Ölförderer herauszunehmen bzw. bei Bedarf wieder einzusetzen.

Es empfiehlt sich, an den kammerartigen Raum des Ölförderers ein Steigrohr anschließen zu lassen, dessen vorderer Bereich zur lösbaren Unterbringung des Befestigungsendes eines Verlängerungsrohres ausgebildet ist.

Zweckmäßig weist das Verlängerungsrohr einen gekrümmten Mittelteil auf, der in ein nach unten gerichtetes freies Ende übergeht, an dem abnehmbar der Reinigungs- oder Filterbeutel befestigt ist. Beim Gebrauch des Ölförderers ragt der an dem Verlängerungsrohr sitzende Reinigungs- oder Filterbeutel in ein Auffanggefäß, das neben dem Behälter des elektrischen Fritiergerätes aufgestellt ist.

Es empfiehlt sich, den Grundkörper des Ölförderers mit dem Aufhänger eine einstückige Baueinheit bilden zu lassen. Diese wird vorzugsweise aus einem speiseölbeständigen Kunststoff hergestellt. Diese Baueinheit wird dann ergänzt durch Anbringung des Verlängerungsrohres und der Überwurfmutter am unteren freien Ende des Grundkörpers sowie durch Anbringen des Antriebes für die Welle.

Weitere Einzelheiten der Erfindung sind in der folgenden speziellen Beschreibung erläutert.

Die Erfindung ist in einem Ausführungsbeispiel dargestellt und zwar zeigen:

Fig. 1   teils im Schnitt, teils in Seitenansicht den Behälter eines elektrischen Fritiergerätes mit eingesetztem Ölförderer und einem daneben angeordneten Auffanggefäß für das gereinigte Öl, letzteres ebenfalls teilweise im Schnitt und teilweise in Seitenansicht,

Fig. 2   im vergrößerten Maßstab einen Längsschnitt durch den Ölförderer gemäß der Fig. 1 bei fehlendem Antrieb, teilweise in Seitenansicht und

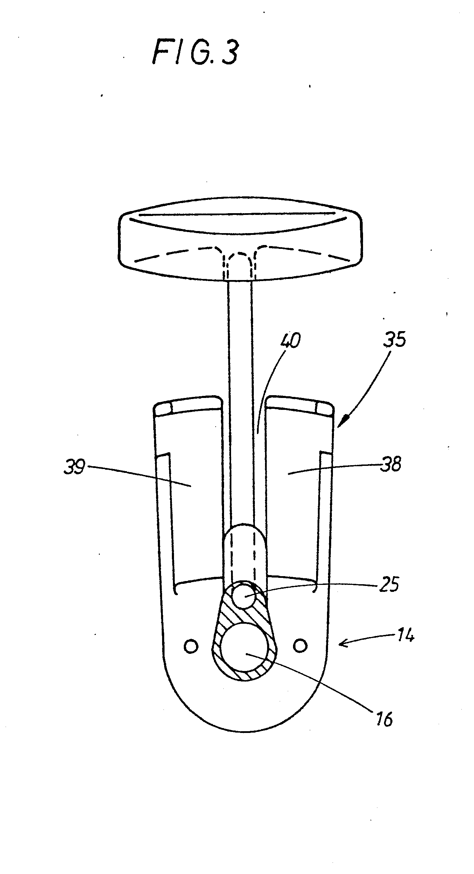

Fig. 3   einen Schnitt nach der Linie III-III der Fig. 2.

Es sei zunächst erwähnt, daß in den Figuren der Zeichnungen nur diejenigen Teile eines elektrischen Fritiergerätes dargestellt sind, die für das Verständnis der Erfindung Bedeutung haben. So ist der beim Fritieren auf den Behälter aufzusetzende Deckel entfernt worden. Im übrigen können alle fehlenden Teile des elektrischen Fritiergerätes eine an sich bekannte Ausbildung aufweisen.

Im gewählten Ausführungsbeispiel weist das elektrische Fritiergerät einen Behälter lo auf, der im Querschnitt kreisförmig gestaltet ist und über nicht näher bezeichnete Füße auf einer Aufstellfläche, beispielsweise auf einem Tisch, ruht. Der Behälter des Fritiergerätes hat eine umlaufende, aufrechte Seitenwand 11 mit einem Boden 13. Das obere freie Ende der Seitenwand 11 ist nach innen abgewinkelt und bildet einen oberen umlaufenden Rand 12, auf den beim bestimmungsgemäßen Gebrauch des Fritiergerätes der in der Zeichnung nicht dargestellte Deckel aufgesetzt wird. Im Bereich der Außenfläche der Seitenwand 11 sind in bekannter und daher nicht dargestellter Weise Steuer- und Regeleinrichtungen für das elektrische Fritiergerät angeordnet.

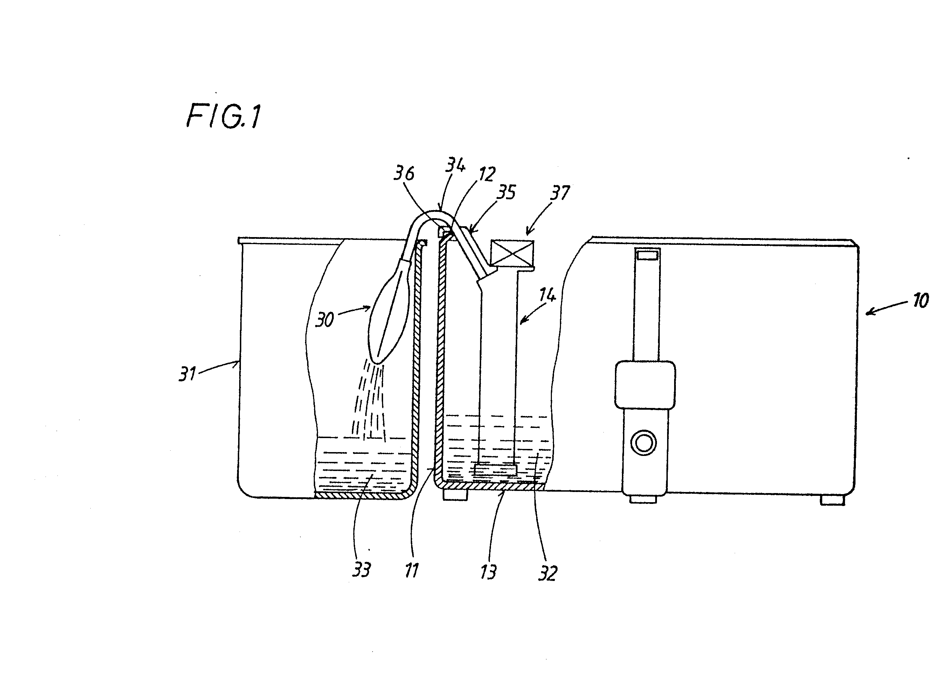

Um das nach der Benutzung des Fritiergerätes verschmutzte, in seinem Behälter 1o befindliche Öl 32 zwecks Reinigung aus diesem zu entfernen, ist erfindungsgemäß ein Ölförderer 14 vorgesehen, der - vergl. dazu die Fig. 1 der Zeichnung - in den Behälter 1o derart einsetzbar ist, daß sein unteres freies Ende im Bereich der Innenfläche des Bodens 13 des Behälters 1o liegt.

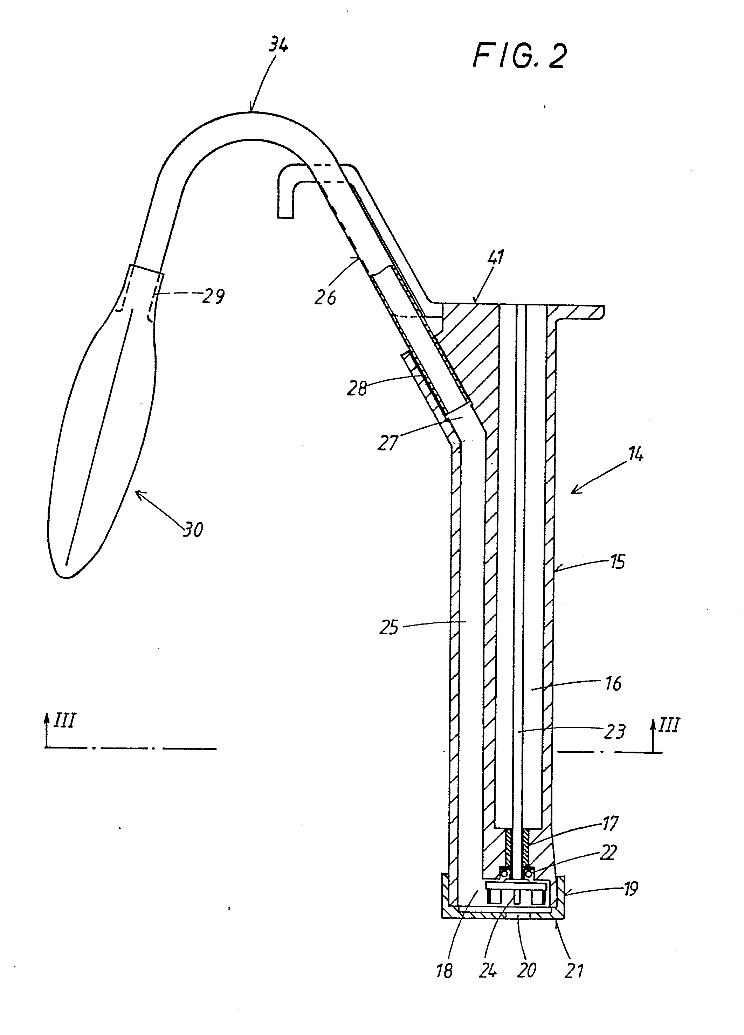

Die Ausbildung und Gestaltung des Ölförderers 14 ist am besten aus der Fig. 2 der Zeichnung ersichtlich. Daraus ergibt sich, daß der Ölförderer 14 im gewählten Ausführungsbeispiel ein im Querschnitt etwa ellipsenförmiges Gehäuse 15 aufweist, welches in seiner Längsrichtung von einer Bohrung 16 mit kreisförmigem Querschnitt durchsetzt wird. In dieser Bohrung 16 ist eine Welle 23 untergebracht, die mit ihrem freien Ende mit einem generell mit 37 bezeichneten Antrieb zusammenwirkt. Der untere Teil der Welle 23 durchgreift einen verengten Bohrungsbereich 17, an dessen Ende eine nicht näher bezeichnete Aufnahme zur Unterbringung eines Lagers 22 für die Welle 23 angeordnet ist. Dabei geht diese Aufnahme in einen kammerartigen Raum 18 über, in dem ein Flügelrad 24 angeordnet ist, welches auf dem unteren Ende der Welle 23 sitzt. Sowohl das Lager 22 für die Welle 23 als auch dessen Flügelrad 24 können eine an sich bekannte Ausbildung haben.

Das in das Speiseöl 32 eintauchende Ende des Ölförderers 14 wird durch eine Überwurfmutter 19 verschlossen, dessen zugleich die untere Begrenzungswand des kammerartigen Raumes 18 bildende Decke 21 einen Durchbruch 2o zum Durchtritt des zu fördernden Öles 32 aufweist. Bei Bedarf können selbstverständlich in der Decke 21 der Überwurfmutter 19 auch mehrere Durchbrüche angeordnet sein.

An den kammerartigen Raum 18 des Ölförderers 14 schließt sich ein im Querschnitt kreisförmiges Steigrohr 25 an, dessen vorderer abgeknickter Bereich 27 zur lösbaren Unterbringung des Befestigungsendes 28 eines Verlängerungsrohres 26 ausgebildet ist. Gegebenenfalls kann das Befestigungsende
28 in dem Bereich 27 auch durch Preßsitz gehalten werden.

Die Fig. 2 der Zeichnung läßt erkennen, daß das Verlängerungsrohr 26 einen
gekrümmten Mittelteil 34 aufweist, der in ein nach unten gerichtetes freies
Ende 29 übergeht, an dem abnehmbar ein Reinigungs- oder Filterbeutel 3o
befestigt ist. Dieser ragt - wie die Fig. 1 veranschaulicht - beim Gebrauch
des Ölförderers 14 in ein Auffanggefäß 31, das seitlich neben dem Behälter
1o angeordnet ist und welches das gereinigte Öl 33 auffängt.

Im dargestellten Ausführungsbeispiel weist der Ölförderer 14 einen den Rand
12 des Behälters 1o übergreifenden Aufhänger 35 auf. Dabei ist der Aufhänger
35 gabelförmig gestaltet und hat zwei Arme 38, 39, die einen Freiraum begrenzen, durch den das Verlängerungsrohr 26 hindurchgeführt wird. Die Arme 38,
39 des Aufhängers 35 laufen an ihrem vorderen Ende jeweils in einen Haken
36 aus.

Im gewählten Ausführungsbeispiel bildet der Grundkörper des Ölförderers
14 mit dem Aufhänger 35 eine einstückige Baueinheit, die aus einem ölbeständigen Werkstoff, insbesondere Kunststoff, gefertigt ist. Diese Baueinheit
wird dann ergänzt durch die Anbringung des Verlängerungsrohres 26 und der
Überwurfmutter 19 am unteren freien Ende des Grundkörpers. Ferner muß noch
der Antrieb 37 - wie in der Fig. 1 ersichtlich - auf der Aufsatzfläche 41
des Grundkörpers des Ölförderers 14 angebracht werden.

In der Fig. 1 der Zeichnung ist der Antrieb 37 für die Welle 23 und damit für
das Flügelrad 24 nur schematisch angedeutet. Dies geschieht, weil die Ausbildung des Antriebes 37 unterschiedlich gestaltet sein kann. Bevorzugt wird
ein elektromotorischer Antrieb. Dieser kann sowohl über Batterien als auch
über das Stromnetz angetrieben werden. Anstelle des elektromotorischen Antriebes kann auch der Motor eines Haushaltsgerätes, insbesondere eines Mixers
eingesetzt werden. In diesem Falle wird das obere freie Ende der Welle 23 so
ausgebildet, daß es mit dem Motor des Mixers bzw. mit einem vorgeschalteten
Getriebe gekuppelt werden kann. Bei einer vereinfachten Ausführungsform der Erfindung kann anstelle eines elektromotorischen Antriebes auch ein Handbetrieb Verwendung finden.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Wenn auch wegen der Lagesicherung der Aufhängung des Ölförderers der Vorzug gegeben wird, so kann im Bedarfsfall auch ein Aufstellen des Ölförderers auf der Innenfläche des Bodens 13 des Behälters 1o vorgenommen werden. In diesem Falle empfiehlt es sich, zur Erhöhung der Standsicherheit eine vergrößerte Fußplatte einzusetzen, die darüber hinaus Füße oder Vorsprünge aufweisen muß, damit ein Durchlaß des zu reinigenden Öles 32 in den kammerartigen Raum 18 des Ölförderers möglich ist. Es ist auch möglich, den Aufhänger 35 teleskopartig auszubilden, damit eine Anpassung an unterschiedlich hohe Behälter für Friteusen erreicht wird. Die Teleskopteile des Aufhängers können dann in ihrer Länge so eingestellt werden, daß das untere Ende des Ölförderers im Bereich der Innenfläche des Bodens 13 des Gehäuses der Friteuse zu liegen kommt. Anstelle der dem Ausführungsbeispiel zugrunde gelegten Pumpe mit Flügelrad 24 können auch andere an sich bekannte Pumpen eingesetzt werden. Erwähnt sei beispielsweise die Radialpumpe.

PATENTANWÄLTE          0143885

DIPL.-PHYS. BUSE · DIPL.-PHYS. MENTZEL · DIPL.-ING. LUDEWIG
Unterdörnen 114 · Postfach 200210 · 5600 Wuppertal 2 · Fernruf (0202) 55 70 22/23/24 · Telex 8 591 606 wpat

89

5600 Wuppertal 2, den
Kennwort: Ölreinigung

Firma Robert Krups Stiftung & Co. KG., Heresbachstr. 29, 565o Solingen 19

-----------------------------------------------------------------------

Elektrisches Fritiergerät

-----------------------------------------------------------------------

Bezugszeichenliste:

lo - Behälter des Fritiergerätes

11 - Seitenwand (von lo)

12 - oberer Rand (von 11)

13 - Boden (von lo)

14 - Ölförderer

15 - Gehäuse (von 14)

16 - Bohrung (in 15)

17 - verengter Bodenbereich

18 - kammerartiger Raum

19 - Überwurfmutter

2o - Durchbruch (in 21)

21 - Decke (von 19)

22 - Lager

23 - Welle (für Antrieb)

24 - Flügelrad

25 - Steigrohr

26 - Verlängerungsrohr

27 - vorderer Bereich (von 25)

28 - Befestigungsende (von 26)

29 - vorderes freies Ende (von 26)

3o - Reinigungs- bzw. Filterbeutel

31 - Auffanggefäß

32 - zu reinigendes Öl (in lo)

33 - gereinigtes Öl (in 31)

34 - gekrümmter Mittelteil (von 26)

35 - Aufhänger

36 - Haken (von 35)

38 - Arm (von 35)

39 - Arm (von 35)

4o - Freiraum (zwischen 38 und 39)

41 - Aufsetzfläche (für 37)

PATENTANWÄLTE    0143885

DIPL.-PHYS. BUSE · DIPL.-PHYS. MENTZEL · DIPL.-ING. LUDEWI

Unterdörnen 114 · Postfach 200210 · 5600 Wuppertal 2 · Fernruf (0202) 5570 22/23/24 · Telex 8591 606 w|

89

5600 Wuppertal 2, den
Kennwort: Ölreinigung

Firma Robert Krups Stiftung & Co. KG., Heresbachstr. 29, 5650 Solingen 19

-----------------------------------------------------------------------------

Elektrisches Fritiergerät

-----------------------------------------------------------------------------

A n s p r ü c h e :

1. Elektrisches Fritiergerät mit einem topfartigen, über eine Heizeinrichtung heizbaren und Speiseöl aufnehmenden Behälter und mit einem den
   Behälter verschließenden, abnehmbaren Deckel,

   g e k e n n z e i c h n e t   d u r c h

   einen in den Behälter (1o) einsetzbaren Ölförderer (14) dessen Einlaß
   im Bereich des Bodens (13) des Behälters (1o) liegt und dessen Auslaß abnehmbar einen Reinigungs- und Filterbeutel (3o) trägt.

2. Elektrisches Fritiergerät nach Anspruch 1, dadurch gekennzeichnet, daß
   der Ölförderer (14) als Pumpe ausgebildet ist.

3. Elektrisches Fritiergerät nach Anspruch 1 und 2, dadurch gekennzeichnet,
   daß eine im Gehäuse (15) des Ölförderers (14) gelagerte Welle (23) an
   ihrem einen, in das Öl (32) eintauchenden Ende eine Fördereinrichtung, vorzugsweise ein Flügelrad (24), aufweist, während ihr anderes Ende mit einem
   Antrieb (37) kuppelbar ist.

4. Elektrisches Fritiergerät nach Anspruch 3, gekennzeichnet
   durch die Verwendung eines elektromotorischen Antriebs für den Ölförderer (14) der mit dem freien End e seiner Welle (23) kuppelbar ist.

0143885

5. Elektrisches Fritiergerät nach einem oder mehreren der vorangehenden Ansprüche, dadurch gekennzeichnet, daß der Ölförderer (14) einen den Rand (12) des Behälters (1o) übergreifenden Aufhänger (35) aufweist.

6. Elektrisches Fritiergerät nach Anspruch 5, dadurch gekennzeichnet, daß der Aufhänger (35) gabelförmig gestaltet ist und zwei Arme (38, 39) aufweist, die einen Freiraum (4o) begrenzen und an ihrem vorderen Ende jeweils in einen Haken (36) auslaufen.

7. Elektrisches Fritiergerät nach einem oder mehreren der vorangehenden Ansprüche, dadurch gekennzeichnet, daß der Ölförderer (14) eine in seiner Längsrichtung verlaufende Bohrung (16) zur Unterbringung der Welle (23) aufweist, die an ihrem einen Ende offen ist und an ihrem gegenüberliegenden anderen Ende in einen verengten Bohrungsbereich (17) übergeht, an dessen Ende eine Aufnahme zur Unterbringung eines Lagers (22) für die Welle (23) angeordnet ist, wobei die Aufnahme in einen kammerartigen Raum (18) übergeht, in dem das Flügelrad (24) angeordnet ist.

8. Elektrisches Fritiergerät nach einem oder mehreren der vorangehenden Ansprüche, dadurch gekennzeichnet, daß das in das Speiseöl (32) eintauchende Ende des Ölförderers (14) durch eine Überwurfmutter (19) verschlossen ist, dessen zugleich die untere Begrenzungswand des kammerartigen Raumes (18) bildende Decke (21) einen Durchbruch (2o) zum Durchtritt des zu fördernden Öles (32) aufweist.

9. Elektrisches Fritiergerät nach Anspruch 7 und 8, dadurch gekennzeichnet, daß sich an den kammerartigen Raum (18) des Ölförderers (14) ein Steigrohr (25) anschließt, dessen vorderer Bereich (27) zur lösbaren Unterbringung des Befestigungsendes (28) eines Verlängerungsrohres (26) ausgebildet ist.

1o. Elektrisches Fritiergerät nach Anspruch 9, dadurch gekennzeichnet, daß das Verlängerungsrohr (26) einen gekrümmten Mittelteil (34) aufweist, der in ein nach unten gerichtetes freies Ende (29) übergeht, an dem abnehmbar ein Reinigungs- oder Filterbeutel (3o) befestigt ist.

x das

FIG.1

0143885

FIG. 2

KRUPS

0143885

FIG. 3

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 953 097 (PAPPAS)<br>* Insgesamt * | 1-4,10 | A 47 J 37/12 |
| X | GB-A-2 106 412 (OIL PROCESS SYSTEMS INC.)<br>* Insgesamt * | 1-4 | |
| A | | 7-9 | |
| X | US-A-3 415 181 (HART)<br>* Insgesamt * | 1-5 | |

---

**RECHERCHIERTE SACHGEBIETE (Int. Cl.4)**

A 47 J

Der vorliegende Recherchenbericht wurde für alle Patentansprüche erstellt.

| Recherchenort | Abschlußdatum der Recherche | Prüfer |
|---|---|---|
| DEN HAAG | 06-02-1985 | SCHARTZ J. |